# FASCICULE DE BREVET EUROPEEN

(11) **EP 3 738 834 B1**
(45) Date de publication et mention de la délivrance du brevet: **29.06.2022**
(21) Numéro de dépôt: 20174883.7
(22) Date de dépôt: 15.05.2020
(51) Int. Cl.: B60R 13/04, B60R 19/48, H01Q 1/02, G01S 13/93, H01Q 1/32, H01Q 1/42

(54) **PIÈCE DE CARROSSERIE AUTOMOBILE COMPRENANT UNE RÉGION DESTINÉE A ÊTRE PLACÉE EN REGARD D'UN RADAR**
KAROSSERIETEIL EINES KRAFTFAHRZEUGS MIT EINEM BEREICH EINES RADAR ZUGEWANDT
VEHICLE BODYWORK PART HAVING A REGION FACING A RADAR

(30) Priorité: 17.05.2019 FR 1905199
(43) Date de publication de la demande: 18.11.2020
(73) Titulaire: Compagnie Plastic Omnium, 69007 Lyon (FR)
(72) Inventeur: LANDOULSI, Alaeddine, 01150 SAINTE-JULIE (FR); MAIORESCU, Silviu, 01150 SAINTE-JULIE (FR); ORAIN, Quentin, 01150 SAINTE-JULIE (FR); NEUBAUER, Markus, 01150 SAINTE-JULIE (FR)
(74) Mandataire: LLR

(56) Documents cités:
- EP-A2- 1 646 266
- DE-A1-102013 217 391
- US-A1- 2014 093 665

## Description

L'invention concerne une pièce de carrosserie automobile comprenant une région destinée à être placée en regard d'un radar.

On connaît déjà dans l'état la technique, des pièces de carrosserie de véhicules automobiles comprenant une partie destinée à être placée devant un radar, ou autrement dit ayant une fonction de radôme. Ainsi, il est indispensable que la partie de la pièce de carrosserie destinée à être placée devant le radar permette une bonne transmission des ondes radar qui la traversent. Or, les pièces de carrosserie présentent des épaisseurs minimales dues à leur procédé de fabrication. Une solution connue pour améliorer la transparence aux ondes radar consiste donc à diminuer localement l'épaisseur de la pièce dans la partie formant radôme, pour atteindre une épaisseur qui permet d'optimiser l'atténuation des ondes à un minimum. Cependant cette solution présente plusieurs inconvénients, parmi lesquels un risque de défaut d'aspect de la pièce de carrosserie, une complexification des moyens et procédés d'injection et un risque de fragilisation dans la zone de moindre épaisseur.

On connait de la demande européenne EP 1 646 266 A2, qui montre le préambule de la revendication 1, de la demande américaine US 2014093665 A1 et de la demande allemande DE 102013217391 A1 une pièce de carrosserie comprenant un élément (sous la forme d'un film chauffant ou d'un élément décoratif) destiné à être positionné sur la pièce de carrosserie, devant une zone d'émission d'ondes d'un radar.

L'invention a notamment pour but de fournir une pièce de carrosserie de véhicule automobile comprenant une région destinée à être placée en regard d'un radar, dans laquelle cette région possède une bonne transparence aux ondes radar, tout en étant facile à fabriquer et sans défaut d'aspect.

A cet effet l'invention a pour objet une pièce de carrosserie de véhicule automobile selon la revendication 1.

De manière inattendue, les inventeurs ont constaté que la transparence aux ondes radar d'une région d'une pièce de carrosserie placée en regard d'un radar peut être améliorée en augmentant l'épaisseur. Cependant, on souhaite qu'une pièce de carrosserie soit d'épaisseur généralement constante pour faciliter l'injection de la pièce tout en obtenant un bon aspect de surface et on souhaite aussi que l'épaisseur d'une pièce de carrosserie soit faible, en particulier pour des raisons de poids du véhicule, d'esthétique, de facilité de mise en œuvre. Ainsi, pour obtenir une transmission optimale des ondes radar dans la région d'une pièce de carrosserie destinée à être placée dans un radar, tout en conservant une pièce de carrosserie d'épaisseur faible, l'épaisseur de la pièce a été augmentée localement dans la région destinée à être placée devant le radar, contrairement aux solutions connues de l'état de la technique qui consistent à abaisser l'épaisseur dans cette région.

Au sens de l'invention, une région destinée à être placée en regard d'un radar, est une région de pièce de carrosserie susceptible d'être traversée par les ondes d'un radar situé sur le véhicule. Ainsi cette région correspond sensiblement à la projection du cône formé par les ondes d'un radar sur la pièce de carrosserie.

On comprend que la « zone périphérique » de la région destinée à être placée en regard d'un radar est formée par la partie de la pièce de carrosserie située autour de la région, et au voisinage de la région.

Ainsi, le corps principal est simple à fabriquer et surtout ce corps peut être de géométrie constante. En particulier, lorsque ce corps principal est obtenu par moulage par injection, la forme du moule est simple. De plus, en cas de remplacement d'une pièce de carrosserie chez un concessionnaire, le concessionnaire dispose de corps principaux standards, et l'épaisseur de la région destinée à être placée devant le radar est choisie et fixée aisément grâce à des films d'épaisseurs adaptées. Plus particulièrement, dans le cas où la pièce est peinte, l'épaisseur optimale de la région varie en fonction de la peinture qui est appliquée.

Dans un mode de réalisation, l'épaisseur de la région destinée à être placée devant un radar est choisie à partir d'un ensemble de couples valeurs d'atténuation et de réflexion des ondes radar / épaisseur de la région.
Cet ensemble de couples est obtenu par exemple par des mesures et calculs d'atténuation et réflexion des ondes en fonction de l'épaisseur, et également en fonction de paramètres tels que les propriétés diélectriques des matériaux utilisés pour la fabrication de la pièce, la peinture appliquée sur la surface de la pièce, notamment les différentes couches et leurs différentes épaisseurs qui permettent d'obtenir une peinture pour application automobile, telles que le primaire, la base et le vernis. Ainsi, le choix de l'épaisseur de la région est simple puisqu'il se fait parmi un ensemble de couples prédéterminés.

Suivant d'autres caractéristiques optionnelles de la pièce de carrosserie prises seules ou en combinaison :
- le corps principal comprend une zone de réception du film positionnée dans la région destinée à être placée en regard d'un radar, et l'épaisseur de la zone de réception du film est sensiblement identique à l'épaisseur de la région périphérique.
- le film comprend des fils chauffants. Cela permet en particulier de dégivrer la région de la pièce de carrosserie placée devant le radar. Les fils sont disposés de manière à conserver la transparence de la région aux ondes radar.
- le film est maintenu sur le corps principal par un adhésif. Ainsi, le montage du film sur le corps principal est aisé, et peut être facilement réalisé dans une concession automobile, lors d'un changement ou d'une réparation de la pièce de carrosserie par exemple.
- le film est maintenu sur le corps principal par surmoulage. Le surmoulage est particulièrement indiqué lors de la fabrication de la pièce de carrosserie en usine, et permet d'éviter l'utilisation d'adhésifs qui peuvent ne pas être très stables dans le temps.
- le matériau du corps principal est choisi parmi le polypropylène, le polycarbonate, le polyméthacrylate de méthyle, un polyamide, le polytéréphtalate d'éthylène (PET), un copolyester, l'acrylonitrile butadiène styrène, un mélange d'acrylonitrile butadiène styrène et de polycarbonate (ABS/PC), l'acrilonitrile styrène acrylate (ASA), le styrène acrilonitrile, un mélange d'acrilonitrile styrène acrylate et de polycarbonate, un mélange de polycarbonate et polytéréphtalate d'éthylène, un mélange de polypropylène et d'EPDM, et le film comprend un matériau choisi parmi du polycarbonate, de l'ABS/PC, du PET, du polyuréthane, du polyamide.
- la face de la pièce de carrosserie destinée à être placée à l'extérieur du véhicule est revêtue d'une peinture.

L'invention a également pour objet un procédé de fabrication d'une pièce de carrosserie automobile selon l'un des modes de réalisation susmentionnés, par moulage d'une matière plastique, ladite pièce comprenant une région destinée à être placée en regard d'un radar, ladite région étant plus épaisse qu'une zone périphérique de la région, et dans lequel on réalise une surépaisseur au niveau de ladite région, l'épaisseur de la région étant choisie de manière à ce que l'atténuation des ondes radar au niveau de la région soit inférieure à l'atténuation des ondes radar au niveau de la zone périphérique.

Suivant d'autres caractéristiques optionnelles du procédé de fabrication d'une pièce de carrosserie prises seules ou en combinaison :
- le procédé de fabrication d'une pièce de carrosserie automobile comprend les étapes suivantes :
   a) on fabrique un corps principal de la pièce de carrosserie par moulage,
   b) on choisit un film d'épaisseur appropriée parmi un ensemble de films, ou on choisit un nombre de films d'épaisseurs appropriées,
   c) on fixe le ou les films choisis dans la région du corps principal destinée à être placée en regard d'un radar.

Ainsi, un seul moule est nécessaire pour la fabrication du corps principal, puisque l'on injecte toujours la même pièce et ensuite on ajoute un film d'épaisseur nécessaire pour obtenir l'épaisseur globale qui donne l'atténuation minimale.
- entre l'étape a) et l'étape b) on revêt la face du corps principal destinée à être placée à l'extérieur du véhicule d'une peinture. Cette peinture comprend généralement plusieurs épaisseurs de composants, tels que primaire, base et vernis, pour former cette épaisseur de peinture pour application automobile.
- l'épaisseur de la région est choisie à partir d'un ensemble de couples valeurs d'atténuation et de réflexion des ondes radar / épaisseur de la région.
- à l'étape b) le choix de l'épaisseur du film prend en compte au moins l'un des paramètres suivants : matériau du corps principal, épaisseur de la région, matériau du film, peinture appliquée sur le corps principal.

En effet, les inventeurs ont constaté que l'atténuation des ondes radar dépend du type de matériau plastique composant respectivement le corps principal le film, et dépend également du type de peinture appliquée, par exemple une peinture à aspect mat, nacré ou métallisé. Ainsi, il est préférable de tenir compte de ces paramètres pour le choix du film à appliquer.

### Brève description des figures

L'invention sera mieux comprise à la lecture de la description qui va suivre donnée uniquement à titre d'exemple et faite en se référant aux dessins annexés dans lesquels :
[Fig. 1] La figure 1 est une vue en perspective schématique d'une pièce de carrosserie d'un véhicule automobile selon un premier mode de réalisation de l'invention ;
[Fig. 2] La figure 2 est une vue d'arrière d'une portion de pièce de carrosserie selon le mode de réalisation de la figure 1 ;
[Fig. 3] La figure 3 est une vue d'arrière d'une portion de pièce de carrosserie selon un autre mode de réalisation ;
[Fig. 4] La figure 4 représente des graphes d'atténuation et de réflexion des ondes radar en fonction d'une épaisseur d'un matériau plastique.

### Description détaillée

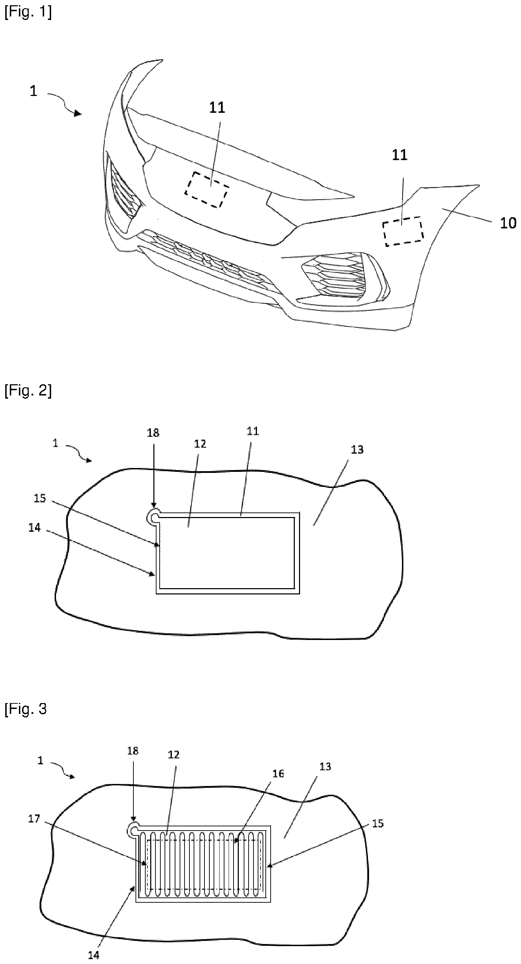

On a représenté sur les figures 1 et 2 une pièce de carrosserie d'un véhicule automobile selon un mode de réalisation de l'invention, désignée par la référence générale 1.

La figure 1 représente pièce de carrosserie de véhicule automobile qui est ici un pare-chocs 1 comprenant des régions 11 destinées à être placées en regard d'un radar, et un corps principal 10. On comprend que la pièce de carrosserie de véhicule automobile selon l'invention n'est pas limitée à un pare-chocs, il peut s'agir d'une autre pièce de carrosserie, par exemple une porte, un toit, un hayon, une aile.

Les radars placés derrière la pièce de carrosserie peuvent être de différents types, par exemple SRR (« short range radar » en anglais) utilisés pour les détections d'obstacles proches, MRR (« mid range radar » en anglais), et LRR (« long range radar » en anglais) utilisés pour l'assistance à la conduite. Ces radars fonctionnent généralement dans les bandes de fréquence 76-77GHz et 77-81GHz.

La figure 2 est une vue partielle d'une pièce de carrosserie de véhicule automobile, sur laquelle est représentée une région 11 destinée à être placée en regard d'un radar, et la zone périphérique 13 de cette région 11. La région 11 est plus épaisse que la zone périphérique 13 de la région 11, et l'épaisseur de la région est choisie de manière à ce que l'atténuation des ondes radar au niveau de la région soit inférieure à l'atténuation des ondes radar au niveau de la zone périphérique 13.

Plus précisément, l'épaisseur de la région 11 est choisie à partir d'un ensemble de couples valeurs d'atténuation et réflexion des ondes radar / épaisseur. Ces couples sont obtenus grâce à des mesures et calculs d'atténuation et réflexion des ondes radars ou bien par des simulations.

Cet ensemble de couples est obtenu par exemple par des mesures et calculs d'atténuation et réflexion des ondes en fonction de l'épaisseur, et également en fonction de paramètres tels que les propriétés diélectriques des matériaux utilisés pour la fabrication de la pièce, la peinture appliquée sur la surface de la pièce, notamment les différentes couches et leurs différentes épaisseurs qui permettent d'obtenir une peinture pour application automobile, telles que le primaire, la base et le vernis.

Selon l'invention, la pièce de carrosserie 1 comprend un corps principal 10 qui comporte la région 11 destinée à être placée en regard d'un radar, et au moins un film 12 rapporté en surépaisseur sur ladite région 11.

Ceci est particulièrement avantageux, car on permet de simplifier la fabrication de la pièce de carrosserie, du fait que la surépaisseur de la région 11 est formée très facilement en fixant un film 12 d'épaisseur prédéterminée. Ainsi, il n'est pas nécessaire d'adapter la forme du corps principal 10 de la pièce de carrosserie en fonction, par exemple, de la peinture qui sera ensuite appliquée.

A titre d'exemple, les mesures d'atténuation et de réflexion permettant d'obtenir les couples transparence aux ondes radar-épaisseur sont faites de la manière suivante :
- on obtient une pièce de carrosserie, ou un échantillon représentatif d'une pièce de carrosserie (c'est-à-dire fabriqué dans le même matériau, par le même procédé, et d'une épaisseur similaire à celle de la zone périphérique 13, et éventuellement peint) ;
- on fixe un film pris parmi un ensemble de films à tester sur la pièce ou l'échantillon de pièce, pour obtenir une région 11 ;
- on mesure la transmission et la réflexion des ondes radar à travers la région 11 ;
- on sélectionne le ou les films présentant des propriétés de transparence aux ondes radar satisfaisantes ;
- on recommence autant de fois que nécessaire, en particulier on effectue des mesures sur des pièces ou échantillons de pièces revêtus de différentes peintures.

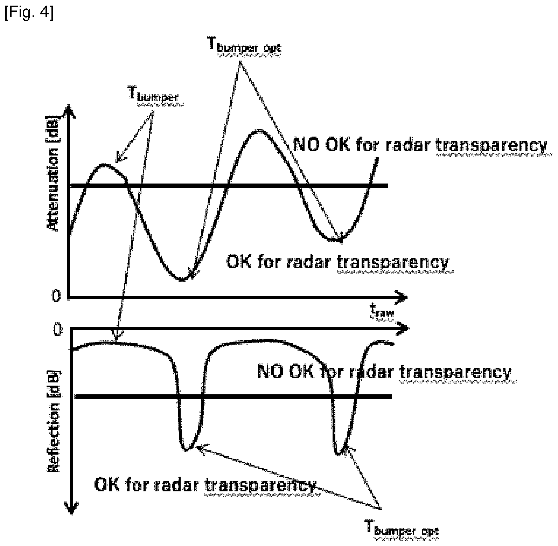

A titre d'exemple, on a représenté schématiquement sur la figure 4 des allures de courbes présentant respectivement la valeur de l'atténuation des ondes radar (en dB) en fonction de l'épaisseur traversée par les ondes, et la valeur de la réflexion des ondes en fonction de l'épaisseur traversée par les ondes. Comme cela est visible, la courbe de l'atténuation présente des minimums d'atténuation pour des épaisseurs données, et pour ces mêmes épaisseurs la réflexion est également minimale. Ainsi, cela permet de déterminer l'épaisseur optimale de la région 11.

Dans un mode de réalisation particulier représenté par la figure 3, le film 12 comprend des fils chauffants 16. Ces fils chauffants permettent de dégivrer la région 11 pour permettre au radar de fonctionner correctement. En effet, la formation de givre ou la présence de neige ou de glace sur la région 11 diminue fortement la transparence aux ondes radar.

La position des fils est choisie de manière à ne pas gêner la transmission des ondes radar, en particulier leur espacement. D'autre part, ainsi que cela est visible sur la figure 3, les parties courbes des fils, qui pourraient faire obstacle à la transmission des ondes radars sont placées à l'extérieur de la partie qui se trouve précisément devant le capteur radar, et qui est représentée par le rectangle en pointillés 17.

Dans un mode de réalisation, le film 12 est maintenu sur le corps principal 10 par surmoulage. Ce mode de réalisation est préférentiellement utilisé lors de la fabrication de la pièce de carrosserie en usine, car il permet d'obtenir des pièces ayant une bonne tenue dans le temps, et le procédé de fabrication est simple.

Dans un autre mode de réalisation, le film 12 est maintenu sur le corps principal par un adhésif. Ce mode de réalisation est plus particulièrement utile lors du changement ou de la réparation de la pièce de carrosserie, en particulier chez un concessionnaire automobile. En effet, dans ce cas, le concessionnaire dispose d'un corps principal 10 standard, c'est-à-dire qui est le même pour tous les véhicules d'un même modèle, et d'un ensemble de films 12. Lors de la fabrication de la pièce de carrosserie 1, un film 12 est choisi en fonction, en particulier mais de manière non limitative, de l'épaisseur du corps principal 10, et plus précisément de l'épaisseur de la zone périphérique 13, de la nature du matériau composant le corps principal 10, de la peinture revêtant la face extérieure du corps principal 10 (couleur, métallisée, mat, nacré ou autre), de la nature du matériau du film 12. Il est ensuite aisément fixé sur le corps principal 10 à l'aide d'un adhésif approprié. Le choix du film par la personne qui réalise la pièce automobile se fait de préférence dans une liste prédéterminée. Après réalisation de la pièce, et avant son montage sur le véhicule, on peut, si nécessaire, vérifier que la transmission et la réflexion des ondes radar se fait de manière adéquate, grâce à un appareil prévu à cet effet.

Dans un mode de réalisation, le corps principal 10 est composé de polypropylène. C'est généralement le cas lorsque la pièce de carrosserie 1 est une peau de pare-chocs. Le film 12 comprend un matériau choisi parmi du polycarbonate, de l'ABS/PC, du PET, du polyuréthane, du polyamide. Ces matériaux sont faciles à obtenir sous forme de films, et sont aptes à être fixés sur le polypropylène par surmoulage ou adhésion.

Dans d'autres modes de réalisation, le matériau du corps principal 10 est choisi parmi le polypropylène, le polycarbonate, le polyméthacrylate de méthyle, un polyamide, le polytéréphtalate d'éthylène (PET), un copolyester, l'acrylonitrile butadiène styrène, un mélange d'acrylonitrile butadiène styrène et de polycarbonate (ABS/PC), l'acrilonitrile styrène acrylate (ASA), le styrène acrilonitrile, un mélange d'acrilonitrile styrène acrylate et de polycarbonate, un mélange de polycarbonate et polytéréphtalate d'éthylène, un mélange de polypropylène et d'EPDM.

Selon l'invention, le corps principal 10 comporte une zone de réception du film 12 identifiée par une texturation de surface ou une légère et fine surépaisseur sur la bordure 14 de la zone de réception. Cela permet de positionner la film 12 au bon endroit du corps principal 10 alors que la pièce de carrosserie est démontée du véhicule. En effet, lorsque la pièce de carrosserie est démontée du véhicule, la position de la région 11 n'est pas facile à connaitre, car le radar n'est pas fixé sur la pièce de carrosserie. Si la zone de réception du film 12 n'est pas identifiée, il est nécessaire que le film soit de plus grande dimension pour être certain de couvrir toute la zone avec les incertitudes de positionnement.

Dans un autre mode de réalisation, le corps principal 10 comporte une zone de réception du film 12 qui comprend une indexation 18. Le film 12 comprend une indexation correspondante à l'indexation 18 de la zone de réception. Cette indexation 18 permet de positionner le film 12 de manière très précise sur la zone de réception. Cela est particulièrement utile pour les films pourvus de fils chauffants car la transparence aux ondes radar dépend du positionnement des fils. Cette indexation peut prendre la forme d'une « oreille » comme représenté sur les figures 2 et 3, mais elle peut également prendre la forme d'une encoche dans le film 12, et d'une forme correspondante à l'encoche sur la zone de réception.

Nous allons à présent décrire le procédé de fabrication d'une pièce de carrosserie 1 de véhicule automobile selon l'invention.

De préférence, le procédé de fabrication de la pièce de comprend une étape de moulage d'une matière plastique. Le procédé comprend la réalisation d'une surépaisseur dans la région 11 de la pièce destinée à être placée devant un radar. La surépaisseur est réalisée par rapport à l'épaisseur de la zone périphérique 13 de la région 11. L'épaisseur de la région 11 est choisie de manière à ce que l'atténuation des ondes radar au niveau de la région 11 soit inférieure à l'atténuation des ondes radar au niveau de la zone périphérique 13. On cherche à ce que cette atténuation soit minimale, et ceci est obtenu en choisissant l'épaisseur de la région 11 parmi des couples valeur d'atténuation des ondes radar-épaisseur de la région 11, ces couples étant prédéterminée par exemple par la méthode décrite ci-dessus.

Dans un mode de réalisation particulier, le procédé de fabrication d'une pièce de carrosserie 1 de véhicule automobile comprend les étapes suivantes :
a) on approvisionne un corps principal 10,
b) on choisit un film 12 d'épaisseur appropriée parmi un ensemble de films, ou on choisit un nombre de films 12 d'épaisseurs appropriées,
c) on fixe le ou les films 12 choisis dans la région 11 du corps principal 10 destinée à être placée en regard d'un radar.

Très fréquemment, entre l'étape a) et l'étape b) on revêt la face du corps principal destinée à être placée à l'extérieur du véhicule d'une peinture.

Ainsi, le corps principal est identique pour tous les véhicule de même modèle, et un seul moule est donc nécessaire pour le corps principal, puisque l'on injecte toujours la même pièce et on ajoute ensuite un ou des films d'épaisseur nécessaire pour obtenir l'épaisseur globale qui donne l'atténuation et la réflexion des ondes radar minimales.

En outre, à l'étape b) ci-dessus, le choix de l'épaisseur du film 12 prend en compte au moins l'un des paramètres suivants : matériau du corps principal 10, épaisseur de la région 11, matériau du film 12, peinture appliquée sur le corps principal 10. En effet, les inventeurs ont constaté que la transmission des ondes radar dépend bien sûr de l'épaisseur des composants de la peinture pour application automobile, primaire, base et vernis, et aussi de la couleur de la peinture appliquée, ainsi que du fait que la peinture soit métallisée, mat, nacrée ou autre. Ainsi, la peinture est un paramètre important dans le choix du ou des films à appliquer dans la région 11.

### Liste des références

- 1 :: Pièce de carrosserie
- 10 :: Corps principal
- 11 :: Région destinée à être placée en regard d'un radar
- 12 :: Film (d'augmentation de l'épaisseur de la région 11)
- 13 :: Zone périphérique de la région 11
- 14 :: Bordure de la zone de réception du film 12 sur le corps 10
- 15 :: Bordure du film 12
- 16 :: Fils chauffants
- 17 :: Zone placée devant le capteur radar
- 18 :: Indexation de la zone de réception du film

## Revendications

1. Pièce de carrosserie (1) de véhicule automobile comprenant une région (11) destinée à être placée en regard d'un radar, la région (11) étant plus épaisse qu'une zone périphérique (13) de la région (11), **caractérisée en ce que** l'épaisseur de la région (11) est choisie de manière à ce que l'atténuation des ondes radar au niveau de la région (11) soit inférieure à l'atténuation des ondes radar au niveau de la zone périphérique (13), la pièce de carrosserie (1) comprenant un corps principal (10) qui comporte la région (11) destinée à être placée en regard d'un radar, et au moins un film (12) rapporté sur ladite région (11), le corps principal (10) comportant une zone de réception du film (12) identifiée par une texturation sur la zone de réception ou une légère et fine surépaisseur ou une texturation uniquement sur la bordure (14) de la zone de réception.

2. Pièce de carrosserie (1) selon la revendication 1, dans laquelle l'épaisseur de la région (11) est choisie à partir d'un ensemble de couples valeurs d'atténuation et réflexion des ondes radar / épaisseur de la région (11).

3. Pièce de carrosserie (1) selon la revendication 1 ou 2, dans laquelle le corps principal comprend une zone de réception du film (12) positionnée dans la région (11), et l'épaisseur de la zone de réception du film (12) est sensiblement identique à l'épaisseur de la région périphérique (13).

4. Pièce de carrosserie (1) selon l'une quelconque des revendications précédentes, dans laquelle le film (12) comprend des fils chauffants (16).

5. Pièce de carrosserie (1) selon l'une quelconque des revendications précédentes, dans laquelle le film (12) est maintenu sur le corps principal (10) par un adhésif.

6. Pièce de carrosserie (1) selon l'une quelconque des revendications 1 à 4, dans laquelle le film (12) est maintenu sur le corps principal (10) par surmoulage.

7. Pièce de carrosserie (1) selon l'une quelconque des revendications précédentes, dans laquelle le corps principal (10) comporte une zone de réception du film (12) qui comprend une indexation (18).

8. Pièce de carrosserie (1) selon l'une quelconque des revendications précédentes, dans laquelle le matériau du corps principal (10) est choisi parmi le polypropylène, le polycarbonate, le polyméthacrylate de méthyle, un polyamide, le polytéréphtalate d'éthylène (PET), un copolyester, l'acrylonitrile butadiène styrène, un mélange d'acrylonitrile butadiène styrène et de polycarbonate (ABS/PC), l'acrilonitrile styrène acrylate (ASA), le styrène acrilonitrile, un mélange d'acrilonitrile styrène acrylate et de polycarbonate, un mélange de polycarbonate et polytéréphtalate d'éthylène, un mélange de polypropylène et d'EPDM, et le film (12) comprend un matériau choisi parmi du polycarbonate, de l'ABS/PC, du PET, du polyuréthane, du polyamide.

9. Pièce de carrosserie (1) de véhicule automobile selon l'une quelconque des revendications précédentes, dans laquelle la face de la pièce de carrosserie destinée à être placée à l'extérieur de véhicule est revêtue d'une peinture.

10. Procédé de fabrication d'une pièce de carrosserie (1) de véhicule automobile, selon l'une quelconque des revendications précédentes, par moulage d'une matière plastique, ladite pièce (1) comprenant une région (11) destinée à être placée en regard d'un radar, ladite région (11) étant plus épaisse qu'une zone périphérique (13) de la région (11), **caractérisé en ce qu'**on réalise une surépaisseur au niveau de ladite région (11), l'épaisseur de la région étant choisie de manière à ce que l'atténuation des ondes radar au niveau de la région (11) soit inférieure à l'atténuation des ondes radar au niveau de la zone périphérique (13).

11. Procédé de fabrication d'une pièce de carrosserie (1) selon la revendication 10, dans lequel :
a) on fabrique un corps principal (10) de la pièce de carrosserie par moulage,
b) on choisit un film (12) d'épaisseur appropriée parmi un ensemble de films, ou on choisit un nombre de films d'épaisseurs appropriées,
c) on fixe le ou les films (12) choisis dans la région (11) du corps principal (10) destinée à être placée en regard d'un radar.

12. Procédé de fabrication selon la revendication 11, dans lequel entre l'étape a) et l'étape b) on revêt la face de la pièce de carrosserie (1) destinée à être placée à l'extérieur du véhicule d'une peinture.

13. Procédé de fabrication selon l'une des revendications 10 à 12 dans laquelle l'épaisseur de la région (11) est choisie à partir d'un ensemble de couples valeurs d'atténuation et de réflexion des ondes radar / épaisseur de la région.

14. Procédé de fabrication selon l'une des revendications 11 à 13 dans lequel à l'étape b) le choix de l'épaisseur du film (12) prend en compte au moins l'un des paramètres suivants: matériau du corps principal (10), épaisseur de la région (11), matériau du film (12), peinture appliquée sur le corps principal (10).

## Patentansprüche

1. Karosserieteil (1) eines Kraftfahrzeugs mit einem Bereich (11), der dazu bestimmt ist, gegenüber einem Radar angeordnet zu werden, wobei der Bereich (11) dicker ist als eine Randzone (13) des Bereichs (11) ausgebildet ist, **dadurch gekennzeichnet, dass** die Dicke des Bereichs (11) so gewählt ist, dass die Dämpfung der Radarwellen auf der Höhe des Bereichs (11) geringer ist als die Dämpfung der Radarwellen auf der Höhe der Randzone (13), das Karosserieteil (1) einen Hauptkörper (10) aufweist, der den Bereich (11) umfasst, der dazu bestimmt ist, gegenüber einem Radar angeordnet zu werden, und mindestens eine Folie (12) aufweist, die auf dem Bereich (11) angebracht ist, wobei der Hauptkörper (10) einen Aufnahmebereich für die Folie (12) aufweist, die durch eine Texturierung auf der Aufnahmebereich oder eine leichte und feine Überdicke oder eine Texturierung nur auf dem Rand (14) des Aufnahmebereichs identifiziert wird.

2. Karosserieteil (1) nach Anspruch 1, wobei die Dicke des Bereichs (11) aus einem Satz von Paaren aus Radarwellendämpfungs- und -reflexionswerten / Dicke des Bereichs (11) ausgewählt wird.

3. Karosserieteil (1) nach Anspruch 1 oder 2, wobei der Hauptkörper einen Aufnahmebereich der Folie (12) aufweist, der in dem Bereich (11) positioniert ist, und die Dicke des Aufnahmebereichs der Folie (12) im Wesentlichen gleich der Dicke des Randbereichs (13) ist.

4. Karosserieteil (1) nach einem der vorhergehenden Ansprüche, wobei die Folie (12) Heizdrähte (16) aufweist.

5. Karosserieteil (1) nach einem der vorhergehenden Ansprüche, wobei die Folie (12) durch einen Klebstoff auf dem Hauptkörper (10) gehalten wird.

6. Karosserieteil (1) nach einem der Ansprüche 1 bis 4, wobei die Folie (12) durch Umspritzen auf dem Hauptkörper (10) gehalten wird.

7. Karosserieteil (1) nach einem der vorhergehenden Ansprüche, wobei der Hauptkörper (10) einen Aufnahmebereich der Folie (12) aufweist, der eine Indexierung (18) aufweist.

8. Karosserieteil (1) nach einem der vorhergehenden Ansprüche, wobei das Material des Hauptkörpers (10) ausgewählt ist aus Polypropylen, Polycarbonat, Polymethylmethacrylat, einem Polyamid, Polyethylenterephthalat (PET), einem Copolyester, Acrylnitril-Butadien-Styrol, einer Mischung aus Acrylnitril-Butadien-Styrol und Polycarbonat (ABS/PC), Acrylnitril-Styrol-Acrylat (ASA), Styrol-Acrylnitril, eine Mischung aus Acrylnitril-Styrol-Acrylat und Polycarbonat, eine Mischung aus Polycarbonat und Polyethylenterephthalat, eine Mischung aus Polypropylen und EPDM, und die Folie (12) ein Material aufweist, das aus Polycarbonat, ABS/PC, PET, Polyurethan und Polyamid ausgewählt ist.

9. Karosserieteil (1) eines Kraftfahrzeugs nach einem der vorhergehenden Ansprüche, wobei die Seite des Karosserieteils, die außerhalb des Fahrzeugs angeordnet werden soll, mit einem Lack beschichtet ist.

10. Verfahren zur Herstellung eines Karosserieteils (1) eines Kraftfahrzeugs nach einem der vorhergehenden Ansprüche durch Formen eines Kunststoffmaterials, wobei das Teil (1) einen Bereich (11) aufweist, der dazu bestimmt ist, gegenüber einem Radargerät angeordnet zu werden, wobei der Bereich (11) dicker ist als eine Randzone (13) des Bereichs (11) ist, **dadurch gekennzeichnet, dass** eine Überdicke auf Höhe des genannten Bereichs (11) hergestellt wird, wobei die Dicke des Bereichs so gewählt wird, dass die Dämpfung der Radarwellen auf Höhe des Bereichs (11) geringer ist als die Dämpfung der Radarwellen auf Höhe der Randzone (13).

11. Verfahren zur Herstellung eines Karosserieteils (1) nach Anspruch 10, bei dem:
a) ein Hauptkörper (10) des Karosserieteils durch Gießen hergestellt wird,
b) eine Folie (12) mit geeigneter Dicke aus einem Satz von Folien ausgewählt wird oder eine Anzahl von Folien mit geeigneter Dicke ausgewählt wird,
c) die ausgewählte(n) Folie(n) (12) in dem Bereich (11) des Hauptkörpers (10), der dazu bestimmt ist, gegenüber einem Radargerät angeordnet zu werden, befestigt wird.

12. Herstellungsverfahren nach Anspruch 11, bei dem zwischen Schritt a) und Schritt b) die Seite des Karosserieteils (1), die dazu bestimmt ist, außerhalb des Fahrzeugs angeordnet zu werden, mit einem Lack beschichtet wird.

13. Herstellungsverfahren nach einem der Ansprüche 10 bis 12, bei dem die Dicke des Bereichs (11) aus einem Satz von Paaren aus Radarwellendämpfungs- und -reflexionswerten / Bereichsdicke ausgewählt wird.

14. Herstellungsverfahren nach einem der Ansprüche 11 bis 13, wobei in Schritt b) bei der Wahl der Dicke der Folie (12) mindestens einer der folgenden Parameter berücksichtigt wird: Material des Hauptkörpers (10), Dicke des Bereichs (11), Material der Folie (12), auf den Hauptkörper (10) aufgetragene Farbe.

## Claims

1. Body part (1) of a motor vehicle comprising a region (11) intended to be placed facing a radar, the region (11) being thicker than a peripheral zone (13) of the region (11), **characterized in that** the thickness of the region (11) is chosen in such a way that the attenuation of radar waves at the level of the region (11) is less than the attenuation of radar waves at the level of the peripheral zone (13), the bodywork part (1) comprising a main body (10) which comprises the region (11) intended to be placed facing a radar, and at least one film (12) reported on that region (11), the main body (10) comprising a film reception area (12) identified by texturing on the reception area or a slight and thin thickness or texturing only on the edge (14) of the reception area.

2. Body part (1) according to claim 1, wherein the thickness of the region (11) is selected from a set of couples attenuation and reflection values of radar waves / thickness of the region (11).

3. Body part (1) according to claim 1 or 2, wherein the main body comprises a film reception area (12) positioned in the region (11), and the thickness of the film reception area (12) is substantially identical to the thickness of the peripheral region (13).

4. Body part (1) according to any one of the preceding claims, wherein the film (12) comprises heating wires (16).

5. Body part (1) according to any one of the preceding claims, wherein the film (12) is held on the main body (10) by an adhesive.

6. Body part (1) according to any one of claims 1 to 4, wherein the film (12) is held on the main body (10) by overmolding.

7. Body part (1) according to any one of the preceding claims, wherein the main body (10) comprises a film reception area (12) which includes indexing (18).

8. Body part (1) according to any one of the preceding claims, wherein the material of the main body (10) is selected from polypropylene, polycarbonate, polymethyl methacrylate, polyamide, polyethylene terephthalate (PET), copolyester, acrylonitrile butadiene styrene, a mixture of acrylonitrile butadiene styrene and polycarbonate (ABS / PC), acrilonitrile styrene acrylate (ASA), styrene acrilonitrile, a mixture of acrilonitrile styrene acrylate and polycarbonate, a mixture of polycarbonate and polyethylene terephthalate, a mixture of polypropylene and EPDM, and the film (12) comprises a material selected from polycarbonate, ABS/PC, PET, polyurethane, polyamide.

9. Body part (1) of a motor vehicle according to any one of the preceding claims, in which the face of the body part intended to be placed on the outside of the vehicle is coated with a paint.

10. A method of manufacturing a body part (1) of a motor vehicle, according to any one of the preceding claims, by molding a plastic material, said part (1) comprising a region (11) intended to be placed facing a radar, said region (11) being thicker than a peripheral zone (13) of the region (11), **characterized in that** an overthickness is achieved at the level of said region (11), the thickness of the region being chosen so that the attenuation of radar waves at the level of the region (11) is less than the attenuation of radar waves at the level of the peripheral zone (13).

11. A method of manufacturing a body part (1) according to claim 10, wherein:
(a) a main body (10) of the body part is manufactured by moulding,
(b) one film (12) of appropriate thickness is selected from a set of films, or a number of films of appropriate thickness is chosen,
(c) the selected film(s) (12) shall be fixed in the region (11) of the main body (10) intended to be placed facing a radar.

12. A manufacturing method according to claim 11, wherein between step a) and step b) is coated the face of the body part (1) intended to be placed outside the vehicle with a paint.

13. A manufacturing method according to one of claims 10 to 12 wherein the thickness of the region (11) is selected from a set of couples attenuation and reflection values of radar waves / thickness of the region.

14. A method of manufacturing according to one of claims 11 to 13 wherein step b) the choice of the thickness of the film (12) takes into account at least one of the following parameters: material of the main body (10), thickness of the region (11), material of the film (12), paint applied to the main body (10).
